# EUROPÄISCHE PATENTSCHRIFT

(11) **EP 3 996 888 B1**
(45) Veröffentlichungstag und Bekanntmachung des Hinweises auf die Patenterteilung: **11.10.2023**
(21) Anmeldenummer: 20725528.2
(22) Anmeldetag: 12.05.2020
(51) Int. Cl.: B27G 19/02, B27B 5/18, B27B 5/20, B27B 5/38, B23D 59/00, B23D 45/04, B23D 45/02, B23D 45/06

(54) **WERKZEUGVORRICHTUNG**
TOOL DEVICE
DISPOSITIF D'OUTIL

(30) Priorität: 10.07.2019 DE 102019210187
(43) Veröffentlichungstag der Anmeldung: 18.05.2022
(73) Patentinhaber: Festool GmbH, 73240 Wendlingen am Neckar (DE)
(72) Erfinder: WILDERMUTH, Markus, 73728 Esslingen (DE); FRANK, Josua, 73614 Schorndorf (DE); RUHLAND, Harald, 72622 Nürtingen (DE)
(74) Vertreter: Patentanwälte Magenbauer & Kollegen Partnerschaft mbB
(86) Internationale Anmeldenummer: PCT/EP2020/063129
(87) Internationale Veröffentlichungsnummer: WO 2021/004679

(56) Entgegenhaltungen:
- US-A1- 2002 056 348
- US-A1- 2002 059 855
- US-A1- 2005 204 885
- US-A1- 2014 260 846

## Beschreibung

Die Erfindung betrifft eine Werkzeugvorrichtung gemäß dem Oberbegriff des Anspruchs 1, insbesondere eine Sägevorrichtung, mit einem Werkzeug zur Bearbeitung eines in einem Arbeitsbereich befindlichen Werkstücks. Die Werkzeugvorrichtung umfasst eine Werkzeug-Bremseinrichtung zum Bremsen einer Werkzeug-Drehbewegung des Werkzeugs. Die Werkzeugvorrichtung umfasst ferner eine Mehrgelenkanordnung, mit der das Werkzeug wahlweise in eine Zuführrichtung in den Arbeitsbereich oder in eine Wegführrichtung aus dem Arbeitsbereich geschwenkt werden kann. Eine solche Werkzeugvorrichtung ist aus der US 2002/0056348 A1 bekannt.

Das Werkzeug ist beispielsweise ein rechtsdrehendes Sägeblatt. Das Schwenken des Werkzeugs erfolgt exemplarisch um ein Basisabschnitts-Gelenk, das auch als Kippgelenk bezeichnet werden kann. Wird bei einer konventionellen Werkzeugvorrichtung das Werkzeug (beispielsweise zur Verletzungsreduktion beim Anwender) mit Hilfe der Werkzeug-Bremseinrichtung in kurzer Zeit abgebremst, so wird das resultierende Bremsmoment im Kippgelenk abgestützt, wodurch eine Schwenkbewegung des Werkzeugs in Zuführrichtung - insbesondere ein Herabkippen des Werkzeugs in Richtung des Benutzers - bewirkt wird. Hierdurch können schwere Verletzungen entstehen.

Die US 2002/0017179 A1 beschreibt eine Gehrungssäge mit zwei Schwingarmen, die jeweils mit einer Basis und einem Gehäuse verbunden sind.

Die US7373863 B2 beschreibt eine Gehrungssäge mit einem Sicherheitsmechanismus. Bei Detektion eines gefährlichen Zustands wird das Sägeblatt mit einem Sägestopp gebremst. Das Trägheitsmoment des Sägeblatts wird in eine lineare Kraft umgesetzt, die das Sägeblatt nach oben treibt.

Die US 2002/0056348 A1 beschreibt eine Gehrungssäge. Wenn die Bremsklinke in Eingriff mit dem rotierenden Sägeblatt kommt, werden das Gehäuse und das Sägeblatt nach oben weg aus der Schneidzone gedrängt.

Die US 2005/0204885 A1 beschreibt eine Gehrungssäge. Wenn die Bremsklinke in Eingriff mit dem Sägeblatt kommt, wird das Gehäuse weg aus der Schneidzone geschwenkt.

Die US 2014/0260846 A1 beschreibt ein automatisches Bremssystem für ein Schwenk-Elektrowerkzeug.

Die US 2002/0059855 A1 beschreibt eine Gehrungssäge.

Eine Aufgabe der Erfindung besteht darin, die Betriebssicherheit der eingangs genannten Werkzeugvorrichtung zu erhöhen.

Die Aufgabe wird gelöst durch eine Werkzeugvorrichtung gemäß Anspruch 1. Die Mehrgelenkanordnung ist ausgebildet, beim Bremsen der Werkzeug-Drehbewegung auftretende Kräfte unter Beibehaltung der Verschwenkbarkeit des Werkzeugs aufzunehmen und/oder umzulenken, so dass das Werkzeug durch die beim Bremsen der Werkzeug-Drehbewegung auftretenden Kräfte nicht in Zuführrichtung geschwenkt wird oder durch die beim Bremsen der Werkzeug-Drehbewegung auftretenden Kräfte in Wegführrichtung geschwenkt wird. Die Werkzeugvorrichtung umfasst eine Antriebseinheit, um das Werkzeug in die Werkzeug-Drehbewegung zu versetzen, wobei die Werkzeugvorrichtung ausgebildet ist, zwischen einem Auslösen der Werkzeug-Bremseinrichtung und einem Abschalten der Antriebseinheit eine Verzögerungszeit einzuhalten und während der Verzögerungszeit eine von der Antriebseinheit bereitgestellte, auf das Werkzeug wirkende Antriebskraft mittels der Mehrgelenkanordnung umzulenken, so dass das Werkzeug in Wegführrichtung verschwenkt wird.

Durch die Mehrgelenkanordnung wird also insbesondere verhindert, dass das Werkzeug beim Bremsen (weiter) in den Arbeitsbereich geschwenkt wird. Hierdurch kann insbesondere vermieden werden, dass ein zum Zeitpunkt des Bremsens in den Arbeitsbereich greifender Benutzer durch das Sägeblatt verletzt wird. Sofern das Bremsen als Reaktion auf einen Kontakt des Sägeblatts mit dem Benutzer - also insbesondere als eine Reaktion auf eine Verletzung des Benutzers - erfolgt, kann durch die beschriebene Mehrgelenkanordnung insbesondere das Ausmaß der Verletzung minimiert werden, da vorzugsweise verhindert wird, dass das Werkzeug durch das Bremsen weiter in Richtung hin zu dem Benutzer geschwenkt wird. Folglich kann die Betriebssicherheit erhöht werden.

Vorteilhafte Weiterbildungen sind Gegenstand der Unteransprüche.

Weitere exemplarische Details sowie beispielhafte Ausführungsformen werden nachstehend unter Bezugnahme auf die Figuren erläutert. Dabei zeigt
- Figur 1: eine schematische Ansicht einer Werkzeugvorrichtung gemäß einer ersten Ausführungsform, wobei sich das Werkzeug außerhalb des Arbeitsbereichs befindet,
- Figur 2: eine schematische Ansicht der Werkzeugvorrichtung gemäß der ersten Ausführungsform, wobei sich das Werkzeug in dem Arbeitsbereich befindet,
- Figur 3: eine schematische Ansicht eines Werkzeugkopfs mit eingezeichneten Kräften, die beim Bremsen der Werkzeug-Drehbewegung auftreten,
- Figur 4: eine schematische Ansicht einer Mehrgelenkanordnung mit eingezeichnetem Schwenkbereich,
- Figur 5: eine schematische Ansicht einer Mehrgelenkanordnung mit eingezeichnetem Achswinkel,
- Figur 6: eine schematische Ansicht einer Mehrgelenkanordnung mit einem eingezeichneten Winkelbereich einer Kraftrichtung,
- Figur 7: eine schematische Ansicht einer Variante der Werkzeugvorrichtung,
- Figur 8: ein Schaubild eines zeitlichen Positionsverlaufs des Werkzeugs,
- Figur 9: eine schematische Ansicht einer Werkzeugvorrichtung gemäß einer zweiten Ausführungsform und
- Figur 10: eine schematische Ansicht einer weiteren Variante der Werkzeugvorrichtung gemäß der ersten Ausführungsform.

Bei der nachstehenden Erläuterung wird Bezug genommen auf die in den Figuren eingezeichnete y-Richtung und z-Richtung sowie die senkrecht zur Zeichnungsebene verlaufende x-Richtung. Die x-Richtung, y-Richtung und z-Richtung sind orthogonal zueinander ausgerichtet.

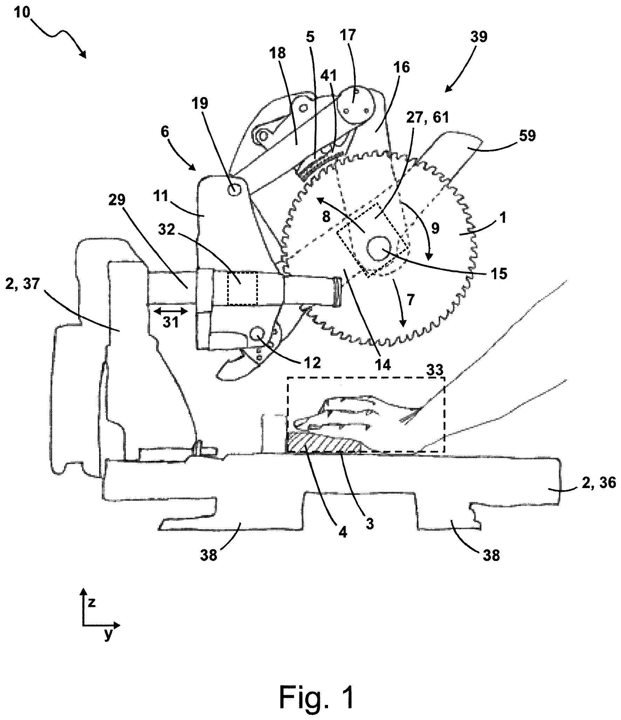

Die Figur 1 zeigt eine Werkzeugvorrichtung 10 gemäß einer ersten Ausführungsform. Die Werkzeugvorrichtung 10 ist exemplarisch als Sägevorrichtung ausgebildet, insbesondere als Tischkreissäge oder Kappsäge, vorzugsweise als Kappzugsäge.

Die Werkzeugvorrichtung 10 umfasst ein Werkzeug 1, exemplarisch ein Sägeblatt. Das Werkzeug 1 dient dazu, ein in einem Arbeitsbereich 33 befindliches Werkstück 4 zu bearbeiten.

Die Werkzeugvorrichtung 10 umfasst eine Werkzeug-Bremseinrichtung 5 zum Bremsen einer Werkzeug-Drehbewegung 9 des Werkzeugs 1.

Die Werkzeugvorrichtung 10 umfasst ferner eine Mehrgelenkanordnung 6, mit der das Werkzeug 1 wahlweise in eine Zuführrichtung 7 in den Arbeitsbereich 33 oder in eine Wegführrichtung 8 aus dem Arbeitsbereich 33 geschwenkt werden kann.

Die Mehrgelenkanordnung 6 ist ausgebildet, beim Bremsen der Werkzeug-Drehbewegung 9 auftretende Kräfte unter Beibehaltung der Verschwenkbarkeit des Werkzeugs 1 aufzunehmen und/oder umzulenken, so dass das Werkzeug 1 durch die beim Bremsen der Werkzeug-Drehbewegung 9 auftretenden Kräfte nicht in Zuführrichtung 7 geschwenkt wird oder durch die beim Bremsen der Werkzeug-Drehbewegung 9 auftretenden Kräfte in Wegführrichtung 8 geschwenkt wird.

Nachstehend sollen weitere exemplarische Details erläutert werden:
Die Werkzeugvorrichtung 10 umfasst exemplarisch eine Tragestruktur 2, durch die zweckmäßigerweise der Arbeitsbereich 33 bereitgestellt wird. Das Werkzeug 1 ist über die Mehrgelenkanordnung 6 relativ zur Tragestruktur 2 verschwenkbar gelagert. Exemplarisch umfasst die Tragestruktur 2 eine Werkstück-Auflagefläche 3, auf die das Werkstück 4 bei der Bearbeitung des Werkstücks 4 mit dem Werkzeug 1 aufgelegt werden kann. Die Werkstück-Auflagefläche 3 ist exemplarisch normal zur z-Richtung ausgerichtet. Der Arbeitsbereich 33 befindet sich zweckmäßigerweise auf und/oder in z-Richtung über der Werkstück-Auflagefläche 3. Der Arbeitsbereich 33 ist insbesondere ein dreidimensionaler Bereich, der sich in x-, y- und z-Richtung erstreckt.

Die Tragestruktur 2 umfasst exemplarisch einen Horizontalabschnitt 36, beispielsweise einen Tischabschnitt, dessen Oberseite die Werkstück-Auflagefläche 3 darstellt. An der Unterseite der Tragestruktur 2, insbesondere des Horizontalabschnitts 36 sind zweckmäßigerweise Standelemente 38 angeordnet, mit denen die Werkzeugvorrichtung 10 auf einer Unterlage abstellbar ist.

Die Tragestruktur 2 umfasst exemplarisch ferner einen Vertikalabschnitt 37, über den der Werkzeugkopf 39 relativ zur Werkstück-Auflagefläche 3, insbesondere relativ zum Horizontalabschnitt 36, in z-Richtung versetzt, exemplarisch nach oben versetzt, gehalten wird.

Exemplarisch umfasst die Mehrgelenkanordnung 6 wenigstens vier Gelenke. Die Mehrgelenkanordnung 6 kann zweckmäßigerweise auch als 4-Gelenk-Kinematik bezeichnet werden. Vorzugsweise umfasst die Mehrgelenkanordnung 6 genau vier Gelenke. Alternativ dazu kann die Mehrgelenkanordnung 6 mehr als vier Gelenke umfassen, beispielsweise genau fünf oder genau sechs Gelenke.

Exemplarisch umfasst die Mehrgelenkanordnung 6 einen Basisabschnitt 11. Über den Basisabschnitt 11 ist die Mehrgelenkanordnung 6 mit der Tragestruktur 2, insbesondere dem Vertikalabschnitt 37, gekoppelt. Exemplarisch umfasst der Basisabschnitt 11 ein Basisabschnitts-Gelenk 12 und ein Nebenschwingen-Gelenk 19, das zweckmäßigerweise in z-Richtung versetzt zu dem Basisabschnitts-Gelenk 12 angeordnet ist. Der Basisabschnitt 11 ist mit seiner Längsachse zweckmäßigerweise im Wesentlichen parallel zur z-Richtung ausgerichtet. Das Basisabschnitts-Gelenk 12 kann auch als Kippgelenk bezeichnet werden.

Exemplarisch umfasst die Mehrgelenkanordnung 6 ferner eine Hauptschwinge 14, die über das Basisabschnitts-Gelenk 12 an dem Basisabschnitt 11 verschwenkbar gelagert ist, sowie eine Nebenschwinge 18, die über das Nebenschwingen-Gelenk 19 verschwenkbar an dem Basisabschnitt 11 gelagert ist. Exemplarisch sind die Hauptschwinge 14 und die Nebenschwinge 18 länglich ausgeführt und mit ihren Längsachsen im Wesentlichen parallel zu einander ausgerichtet. Die Hauptschwinge 14 und die Nebenschwinge 18 sind exemplarisch in positiver y-Richtung neben dem Basisabschnitt 11 angeordnet. Die Hauptschwinge 14 ist exemplarisch näher an dem Arbeitsbereich 33 angeordnet als die Nebenschwinge 18. Exemplarisch ist die Hauptschwinge 14 in z-Richtung unter der Nebenschwinge 18 angeordnet.

Die Mehrgelenkanordnung 6 umfasst ferner eine Seitenschwinge 16, die über ein Hauptschwingen-Gelenk 15 verschwenkbar an der Hauptschwinge 14 gelagert ist. Die Seitenschwinge 16 ist ferner über ein Seitenschwingen-Gelenk 17 verschwenkbar an der Nebenschwinge 18 gelagert. Die Seitenschwinge 16 ist exemplarisch länglich ausgeführt und mit ihrer Längsachse zweckmäßigerweise im Wesentlichen parallel zum Basisabschnitt 1 ausgerichtet. Die Seitenschwinge 16 verbindet die Hauptschwinge 14 und die Nebenschwinge 18. Die Seitenschwinge 16 ist in positiver y-Richtung versetzt zum Basisabschnitt 11 angeordnet.

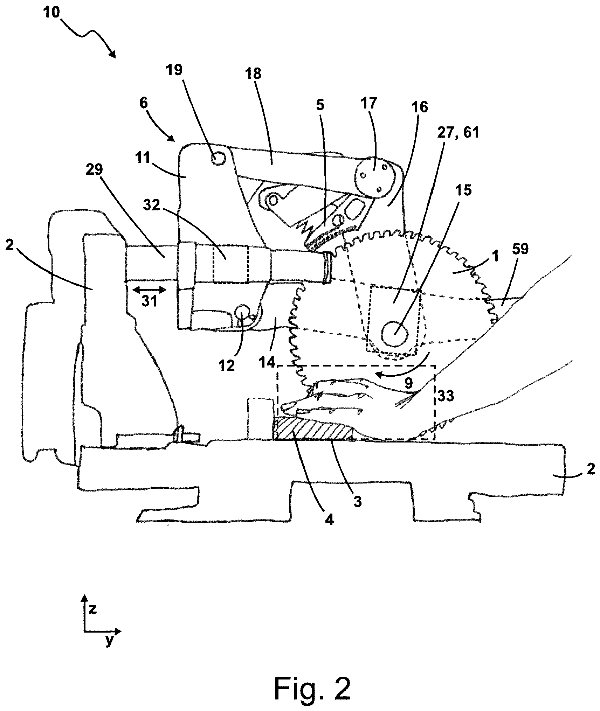

Der Basisabschnitt 11, die Hauptschwinge 14, die Seitenschwinge 16 und die Nebenschwinge 18 bilden zusammen exemplarisch eine rahmenförmige Struktur. In der Stellung der Figur 2 (nachstehend auch als Arbeitsstellung bezeichnet) weist die Mehrgelenkanordnung 6 exemplarisch eine im Wesentlichen rechteckige Form auf, wobei zweckmäßigerweise die Hauptschwinge 14 und die Nebenschwinge 18 mit ihren Längsachsen im Wesentlichen parallel, insbesondere im Wesentlichen horizontal, exemplarisch in y-Richtung, ausgerichtet sind und/oder der Basisabschnitt 11 und die Seitenschwinge 16 mit ihren Längsachsen im Wesentlichen parallel, insbesondere im Wesentlichen vertikal, exemplarisch in z-Richtung, ausgerichtet sind. In der Stellung der Figur 1 (nachstehend auch als Sicherheitsstellung bezeichnet) weist die Mehrgelenkanordnung 6 exemplarisch im Wesentlichen die Form einer Raute auf, wobei zweckmäßigerweise die Hauptschwinge 14 und die Nebenschwinge 18 mit ihren Längsachsen im Wesentlichen parallel ausgerichtet sind und/oder der Basisabschnitt 11 und die Seitenschwinge 16 mit ihren Längsachsen im Wesentlichen parallel ausgerichtet sind.

Die vier Gelenke der Mehrgelenkanordnung 6 - also das Basisabschnitts-Gelenk 12, das Hauptschwingen-Gelenk 15, das Seitenschwingen-Gelenk 17 und das Nebenschwingen-Gelenk 19 - sind zweckmäßigerweise jeweils als Schwenkgelenke ausgebildet und mit ihren Schwenkachsen parallel zueinander, insbesondere parallel zur x-Richtung, ausgerichtet.

Mittels der Mehrgelenkanordnung 6 ist das Werkzeug 1 um das Basisabschnitts-Gelenk 12 herum verschwenkbar. Die Verschwenkung in Zuführrichtung 7 erfolgt in eine erste Drehrichtung um die Schwenkachse des Basisabschnitts-Gelenks 12 - exemplarisch im Uhrzeigersinn - und die Verschwenkung in Wegführrichtung 8 erfolgt in eine zur ersten Drehrichtung entgegengesetzten zweiten Drehrichtung um die Schwenkachse des Basisabschnitts-Gelenks 12 - exemplarisch in Richtung gegen den Uhrzeigersinn.

Über die Mehrgelenkanordnung 10 kann das Werkzeug 1 wahlweise in die Sicherheitsstellung geschwenkt werden, in der es, wie in der Figur 1 gezeigt, außerhalb des Arbeitsbereichs 33, insbesondere in z-Richtung oberhalb des Arbeitsbereichs 33, angeordnet ist, oder in die Arbeitsstellung, in der es, wie in der Figur 2 gezeigt, in den Arbeitsbereich 33 hineinragt und ein in dem Arbeitsbereich 33 befindliches Werkstück 4 bearbeiten, insbesondere sägen, kann.

Die Verschwenkung des Werkzeugs 1 von der Sicherheitsstellung in die Arbeitsstellung erfolgt in die Zuführrichtung 7 und die Verschwenkung des Werkzeugs 1 von der Arbeitsstellung in die Sicherheitsstellung erfolgt in die Wegführrichtung 8. Exemplarisch wird das Werkzeug 1 bei dem Verschwenken in Zuführrichtung 7 hin zu der Werkstück-Auflagefläche 3 geschwenkt und bei dem Verschwenken in Wegführrichtung 8 weg von der Werkstück-Auflagefläche 3 geschwenkt.

Die Verschwenkung des Werkzeugs 1 mittels der Mehrgelenkanordnung 10 wird (im Normalbetrieb, also wenn die Werkzeug-Bremseinrichtung 5 die Werkzeug-Drehbewegung 9 nicht bremst) vorzugsweise durch manuelle Betätigung durch den Benutzer bewirkt, beispielsweise über einen an der Mehrgelenkanordnung 6, exemplarisch an der Hauptschwinge 14, angeordneten Griff 59.

Wie vorstehend bereits erwähnt, ist die Mehrgelenkanordnung 6 ausgebildet, beim Bremsen der Werkzeug-Drehbewegung 9 auftretende Kräfte unter Beibehaltung der Verschwenkbarkeit des Werkzeugs 1 aufzunehmen und/oder umzulenken, so dass das Werkzeug 1 durch die beim Bremsen der Werkzeug-Drehbewegung 9 auftretenden Kräfte nicht in Zuführrichtung 7 geschwenkt wird oder durch die beim Bremsen der Werkzeug-Drehbewegung 9 auftretenden Kräfte in Wegführrichtung 8 geschwenkt wird.

Die Verschwenkbarkeit des Werkzeugs 1 mittels der Mehrgelenkanordnung 6 bleibt beim Bremsen und/oder nach dem Bremsen erhalten, insbesondere in Zuführrichtung 7 und/oder Wegführrichtung 8. Die Verschwenkbarkeit des Werkzeugs 1 ist insbesondere auch in einem Bremszustand gegeben, in dem die Werkzeug-Bremseinrichtung 5, insbesondere der Bremskörper 41 in Eingriff mit dem Werkzeug 1 steht und so die Werkzeug-Drehbewegung 9 blockiert. Das Werkzeug 1 kann also auch beim Bremsen und/oder nach dem Bremsen der Werkzeug-Drehbewegung 9 grundsätzlich noch mittels der Mehrgelenkanordnung 6 insbesondere um das Basisabschnitts-Gelenk 12 herum verschwenkt werden, beispielsweise durch manuelle Betätigung durch den Benutzer. Die Mehrgelenkanordnung 6, insbesondere das Basisabschnitts-Gelenk 12, wird also beim Bremsen und/oder nach dem Bremsen der Werkzeug-Drehbewegung 9 zweckmäßigerweise nicht gesperrt. Insbesondere ist es durch die im Bremszustand gegebene Verschwenkbarkeit möglich, in einem Fall, in dem ein Körperteil eines Benutzers, beispielsweise ein Finger, aufgrund der aktuellen Position des Werkzeugs 1 eingeklemmt ist, das Körperteil durch (insbesondere manuelles) Verschwenken des (sich vorzugsweise weiterhin im Bremszustand befindlichen) Werkzeugs 1 freizugeben und aus der Einklemmung zu lösen. Insbesondere ist für die Freigabe des Körperteils keine Demontage von Komponenten der Werkzeugvorrichtung erforderlich.

Vorzugsweise ist die Mehrgelenkanordnung 10 derart ausgebildet und/oder angeordnet, dass sich während dem Bremsen der Schwerpunkt der Werkzeugvorrichtung 10 in eine von der Zuführrichtung 7 verschiedene Richtung bewegt. Die von der Zuführrichtung 7 verschiedene Richtung ist insbesondere eine im Wesentlichen zur Zuführrichtung 7 entgegengesetzte Richtung.

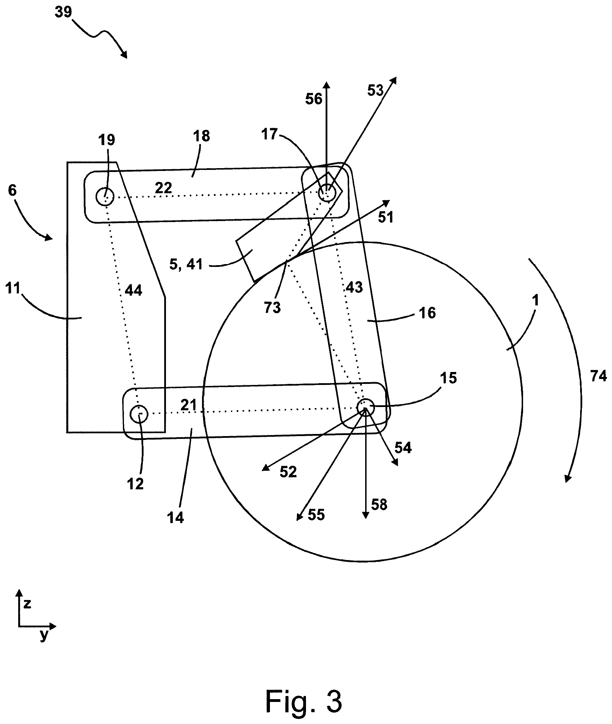

Unter Bezugnahme auf die Figur 3 soll nachstehend näher erläutert werden, wie die Mehrgelenkanordnung 6 die beim Bremsen der Werkzeug-Drehbewegung 9 auftretende Kräfte aufnimmt und/oder umlenkt.

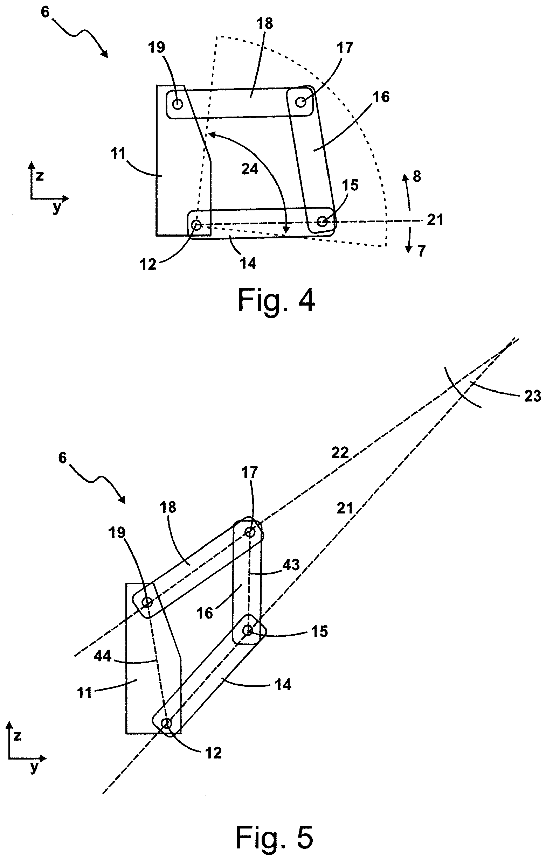

In diesem Zusammenhang soll auf die in der Figur 5 gezeigten, (gedachten) Achsen Bezug genommen werden: eine (gedachte) Hauptschwingen-Achse 21, die durch das Basisabschnitts-Gelenk 12 und das Hauptschwingen-Gelenk 15 verläuft, eine (gedachte) Nebenschwingen-Achse 22, die durch das Nebenschwingen-Gelenk 19 und das Seitenschwingen-Gelenk 17 verläuft, eine (gedachte) Basisabschnitts-Achse 44, die durch das Basisabschnitts-Gelenk 12 und das Nebenschwingen-Gelenk 19 verläuft und eine (gedachte) Seitenschwingen-Achse 43, die durch das Hauptschwingen-Gelenk 15 und das Seitenschwingen-Gelenk 17 verläuft. Die Hauptschwingen-Achse 21, die Nebenschwingen-Achse 22, die Basisabschnitts-Achse 44 und/oder die Seitenschwingen-Achse 43 liegen zweckmäßigerweise in einer y-z-Ebene.

Unter Bezugnahme auf die Figur 3 soll nachstehend näher auf die beim Bremsen wirkenden Kräfte eingegangen werden. Die beim Bremsen auftretenden Kräfte umfassen insbesondere eine erste zweitstufige Kraft 53 mit einer ersten Kraftkomponente 56 und eine dritte zweitstufige Kraft 55 mit einer zweiten Kraftkomponente 58.

Die Mehrgelenkanordnung 6 ist insbesondere ausgebildet, die beim Bremsen der Werkzeug-Drehbewegung 9 auftretenden Kräfte, insbesondere die erste zweitstufige Kraft 53 und/oder die dritte zweitstufige Kraft 55 mit der Hauptschwinge 14 und/oder der Nebenschwinge 18 (und/oder der Seitenschwinge 16) aufzunehmen und/oder umzulenken, so dass die erste und zweite Kraftkomponente 56, 58, die orthogonal zu der Nebenschwingen-Achse 21 und/oder der Hauptschwingen-Achse 22 wirken, sich gegenseitig aufheben oder dass die in Richtung weg von dem Arbeitsbereich 33 wirkende erste Kraftkomponente 56 überwiegt - also insbesondere betragsmäßig größer ist als die in Richtung hin zu dem Arbeitsbereich 33 wirkende zweite Kraftkomponente 58.

Wie in der Figur 3 gezeigt, ist durch die Verzögerung der Werkzeug-Drehbewegung 9 beim Bremsen ein Trägheitsmoment 74 des Werkzeugs 1 um die Drehachse des Werkzeugs 1 gegeben. Beim Bremsen der Werkzeug-Drehbewegung 9, exemplarisch durch Kontakt des Bremskörpers 41 mit dem Werkzeug 1, treten exemplarisch eine erste erststufige Kraft 51 und eine zweite erststufige Kraft 52 auf. Die erststufigen Kräfte 51, 52 wirken auf die Mehrgelenkanordnung 6 und treten als Reaktion der durch den Bremskörper 41 auf das Werkzeug 1 ausgeübten Bremskraft auf. Die erststufigen Kräfte 51, 52 können auch als Reaktionskräfte bezeichnet werden, wobei die erste erststufige Kraft 51 eine Reaktionskraft der auf das Werkzeug 1 ausgeübten Bremskraft ist und die zweite erststufige Kraft 52 eine Reaktionskraft der ersten erststufigen Kraft 51 ist. Die erste erststufige Kraft 51 zeigt, ausgehend von dem Kontaktpunkt 73 zwischen dem Bremskörper 41 und dem Werkzeug 1, exemplarisch in Tangentialrichtung bezogen auf das Werkzeug 1 oder die Werkzeug-Drehbewegung 9. Die zweite erststufige Kraft 52 wirkt auf ein Werkzeuglager, das das Werkzeug 1 und/oder eine mit dem Werkzeug 1 gekoppelte Welle lagert, und/oder auf das Hauptschwingen-Gelenk 15. Die zweite erststufige Kraft 52 zeigt, ausgehend von dem Hauptschwingen-Gelenk 15, exemplarisch in entgegengesetzte Richtung zu der ersten erststufigen Kraft 51.

Die erste erststufige Kraft 51 teilt sich auf in eine erste zweitstufige Kraft 53 und eine zweite zweitstufige Kraft 54, zweckmäßigerweise gemäß der Aufhängung des Bremskörpers 41 und/oder des Werkzeugs 1. Die erste zweitstufige Kraft 53 wirkt exemplarisch in dem Seitenschwingen-Gelenk 17 und zeigt, ausgehend von dem Seitenschwingen-Gelenk 17, in die gleiche Richtung wie eine (gedachte) Verbindungslinie zwischen dem Kontaktpunkt 73 und dem Seitenschwingen-Gelenk 17. Die zweite zweitstufige Kraft 54 wirkt exemplarisch in dem Hauptschwingen-Gelenk 15 und/oder auf das Werkzeuglager und zeigt, ausgehend von dem Hauptschwingen-Gelenk 15, in die gleiche Richtung wie eine (gedachte) Verbindungslinie zwischen dem Kontaktpunkt 73 und dem Hauptschwingen-Gelenk 15.

Die erste zweitstufige Kraft 53 umfasst die erste Kraftkomponente 56. Die erste Kraftkomponente 56 wirkt in dem Seitenschwingen-Gelenk 17 und zeigt, ausgehend von dem Seitenschwingen-Gelenk 17, in eine Richtung orthogonal zur Nebenschwingen-Achse 22 (und vorzugsweise orthogonal zu der durch das Nebenschwingen-Gelenk 19 definierten Schwenkachse), und zwar in Richtung weg von dem Hauptschwingen-Gelenk 15, insbesondere in Richtung weg von dem Arbeitsbereich 33 oder der Werkstück-Auflagefläche 3. Exemplarisch zeigt die zweite Kraftkomponente 56 nach oben. Die erste Kraftkomponente 56 führt zweckmäßigerweise zu einem Verschwenken des Werkzeugs 1 in Wegführrichtung 8.

Die Summe aus der zweiten zweitstufigen Kraft 54 und der zweiten erststufigen Kraft 52 ergibt die dritte zweitstufige Kraft 55. Die dritte zweitstufige Kraft 55 umfasst die zweite Kraftkomponente 58, die in dem Hauptschwingen-Gelenk 15 und/oder dem Werkzeuglager wirkt und, ausgehend von dem Hauptschwingen-Gelenk 15, in eine Richtung orthogonal zu der Hauptschwingen-Achse 21 (und vorzugsweise orthogonal zu der durch das Basisabschnitts-Gelenk 12 definierten Schwenkachse), und zwar in Richtung weg von dem Seitenschwingen-Gelenk 17, insbesondere in Richtung hin zu dem Arbeitsbereich 33 oder hin zu der Werkstück-Auflagefläche 3. Exemplarisch zeigt die zweite Kraftkomponente 58 nach unten. Die zweite Kraftkomponente 58 führt zweckmäßigerweise zu einem Verschwenken des Werkzeugs 1 in Zuführrichtung 7.

Die Mehrgelenkanordnung 6 ist zweckmäßigerweise derart ausgebildet, dass die erste Kraftkomponente 56 und die zweite Kraftkomponente 58 den gleichen Betrag aufweisen oder dass die erste Kraftkomponente 56 (insbesondere betragsmäßig) größer ist als die zweite Kraftkomponente 58.

Wenn die erste Kraftkomponente 56 und die zweite Kraftkomponente 58 den gleichen Betrag aufweisen, wird das Werkzeug 1 durch die vom Bremsen der Werkzeug-Drehbewegung 9 verursachten Kräfte überhaupt nicht verschwenkt - insbesondere nicht in Zuführrichtung 7. Wenn die erste Kraftkomponente 56 betragsmäßig größer ist als die zweite Kraftkomponente 58, wird das Werkzeug 1 durch die beim Bremsen der Werkzeug-Drehbewegung 9 verursachten Kräfte in Wegführrichtung 8 geschwenkt.

Wie sich die erste Kraftkomponente 56 und die zweite Kraftkomponente 58 zueinander verhalten, hängt von dem in der Figur 5 gezeigten Achswinkel 23 zwischen der Hauptschwingen-Achse 21 und der Nebenschwingen-Achse 22 ab.

Der Achswinkel 23 ist zweckmäßigerweise null Grad oder größer als null Grad. Der Achswinkel 23 ist vorzugsweise nicht kleiner als null Grad. Der Achsenwinkel 23 beträgt vorzugsweise zwischen 45 Grad und null Grad, insbesondere zwischen 15 Grad und 5 Grad. Bei einem Achswinkel 23 von null Grad verlaufen die Hauptschwingen-Achse 21 und die Nebenschwingen-Achse 22 parallel zueinander. Bei einem Achswinkel 23 von größer als null Grad kreuzen sich die Hauptschwingen-Achse 21 und die Nebenschwingen-Achse 22 auf derjenigen Seite des Basisabschnitts 11, auf der das Werkzeug 1 angeordnet ist. Bei einem Achswinkel 23 von größer als null Grad kreuzen sich die Hauptschwingen-Achse 21 und die Nebenschwingen-Achse 22 exemplarisch auf der in positiver y-Richtung gelegenen Seite des Basisabschnitts 11 (in der Figur 5 exemplarisch rechts von dem Basisabschnitt 11). Ausgehend von dem Basisabschnitts-Gelenk 12 nähert sich in diesem Fall die Hauptschwingen-Achse 21 in Richtung hin zu dem Hauptschwingen-Gelenk 15 immer weiter der Nebenschwingen-Achse 22.

Bei einem Achswinkel 23 von kleiner als null Grad würden sich die Hauptschwingen-Achse 21 und die Nebenschwingen-Achse 22 auf der in negativer y-Richtung gelegenen Seite des Basisabschnitts 11 treffen (in der Figur 5 exemplarisch links von dem Basisabschnitt 11).

Mit dem beschriebenen Achswinkel von größer gleich null Grad kann gewährleistet werden, dass beim Bremsen der Werkzeug-Drehbewegung 9 die erste Kraftkomponente 56 (betragsmäßig) gleich (bei einem Achswinkel 23 von null Grad) oder größer (bei einem Achswinkel 23 von größer null Grad) als die zweite Kraftkomponente 58 ist.

Die Figur 4 zeigt den Schwenkbereich 24 der Mehrgelenkanordnung 10. Der Schwenkbereich 24 ist hier exemplarisch als derjenige Winkel definiert, um den die (gedachte) Hauptschwingen-Achse 21 maximal um die Schwenkachse des Basisabschnitts-Gelenks 12 verschwenkbar ist. Der Schwenkbereich 24 bezeichnet insbesondere den maximalen Winkel, um den das Werkzeug 1 mit der Mehrgelenkanordnung 6 verschwenkbar ist, insbesondere relativ zur Tragestruktur 2 und/oder dem Arbeitsbereich 33. Exemplarisch liegt der Schwenkbereich 24 in einer y-z-Ebene. Die Ebene des Schwenkbereichs 24 kann auch als Schwenkebene bezeichnet werden. Vorzugsweise ist die Schwenkebene um eine y-Achse verschwenkbar.

Gemäß einer bevorzugten Ausgestaltung ist der Achswinkel 23 über wenigstens 80 % des Schwenkbereichs 24 der Mehrgelenkanordnung 6, insbesondere über den gesamten Schwenkbereich 24 der Mehrgelenkanordnung 6, vorzugsweise über einen Schwenkbereich von wenigstens 55 Grad, null Grad oder größer als null Grad. Zweckmäßigerweise verlaufen also die Hauptschwingen-Achse 21 und die Nebenschwingen-Achse 22 über wenigstens 80 % des Schwenkbereichs 24 der Mehrgelenkanordnung 6, insbesondere über den gesamten Schwenkbereich 24 der Mehrgelenkanordnung 6, vorzugsweise über einen Schwenkbereich 24 von 55 Grad, parallel zueinander oder kreuzen sich auf derjenigen Seite des Basisabschnitts 11, auf der das Werkzeug 1 angeordnet ist, unter dem Achsenwinkel 23.

Gemäß einer bevorzugten Ausgestaltung ist der Achswinkel 23 über wenigstens 80 % des Schwenkbereichs 24 der Mehrgelenkanordnung 6, insbesondere über den gesamten Schwenkbereich 24 der Mehrgelenkanordnung 6, vorzugsweise über einen Schwenkbereich von wenigstens 55 Grad, größer als null Grad und vorzugsweise über den restlichen Anteil des Schwenkbereichs 24, insbesondere den gesamten restlichen Anteil des Schwenkbereichs 24, gleich null. Zweckmäßigerweise kreuzen sich also die Hauptschwingen-Achse 21 und die Nebenschwingen-Achse 22 über wenigstens 80 % des Schwenkbereichs 24 der Mehrgelenkanordnung 6, insbesondere über den gesamten Schwenkbereich 24 der Mehrgelenkanordnung 6, vorzugsweise über einen Schwenkbereich 24 von 55 Grad, auf derjenigen Seite des Basisabschnitts 11, auf der das Werkzeug 1 angeordnet ist, unter dem Achsenwinkel 23 und verlaufen zweckmäßigerweise über den restlichen Anteil des Schwenkbereichs 24, insbesondere über den gesamten restlichen Anteil des Schwenkbereichs 24, parallel zueinander.

Durch die beschriebene Ausgestaltung kann gewährleistet werden, dass das Werkzeug 1 in verschiedenen, vorzugsweise sämtlichen, Schwenkstellungen durch die beim Bremsen der Werkzeug-Drehbewegung 9 auftretenden Kräfte nicht in Zuführrichtung 7 verschwenkt wird oder in Wegführrichtung 8 verschwenkt wird.

Gemäß einer bevorzugten Ausgestaltung beträgt die Änderung des Achswinkels 23 über wenigstens 80 % des Schwenkbereichs 24, insbesondere über den gesamten Schwenkbereich 24, weniger als 20 Grad, insbesondere weniger als 10 Grad. Vorzugsweise ist der innerhalb des Schwenkbereichs 24 auftretende maximale Achswinkel 23 höchstens um 20 Grad größer als der innerhalb des Schwenkbereichs auftretende minimale Achswinkel 23. Hierdurch kann insbesondere erzielt werden, dass die beim Bremsen der Werkzeug-Drehbewegung 9 auftretende, in Wegführrichtung 8 wirkende Kraft sich über den gesamten Schwenkbereich 24 nicht zu stark ändert.

Das Werkzeug 1 ist, wie vorstehend bereits erwähnt, insbesondere als Sägeblatt ausgebildet. Exemplarisch ist das Werkzeug 1 koaxial zu dem Hauptschwingen-Gelenk 15 angeordnet. Die Werkzeugvorrichtung 10 umfasst exemplarisch die Antriebseinheit 27, um das Werkzeug 1 in die Werkzeug-Drehbewegung 9 zu versetzen. Die Antriebseinheit 27 ist exemplarisch an der Hauptschwinge 14 angeordnet. Vorzugsweise umfasst die Antriebseinheit 27 einen Elektromotor, um das Werkzeug 1 in die Werkzeug-Drehbewegung 9 zu versetzen. Die Werkzeug-Drehbewegung 9 erfolgt um eine andere Drehachse als die Verschwenkung in Zuführrichtung 7 und/oder Wegführrichtung 8. Exemplarisch erfolgt die Werkzeug-Drehbewegung 9 um eine Drehachse, die koaxial zu der Schwenkachse des Hauptschwingen-Gelenks 15 ausgerichtet ist, insbesondere über den gesamten Schwenkbereich 24. Der Drehsinn der Werkzeug-Drehbewegung 9 ist vorzugsweise gleich dem Drehsinn der Verschwenkung des Werkzeugs 1 in Zuführrichtung 7.

Die Werkzeug-Bremseinrichtung 5 ist exemplarisch an dem Seitenschwingen-Gelenk 17 angeordnet. Die Werkzeug-Bremseinrichtung 5 kann alternativ auch an der Seitenschwinge 16 angeordnet sein. Die Werkzeug-Bremseinrichtung 5 dient dazu, die Werkzeug-Drehbewegung 9 zu bremsen, insbesondere bis zum Stillstand.

Die Werkzeug-Bremseinrichtung 5 verfügt exemplarisch über den Bremskörper 41, der zweckmäßigerweise mit dem Werkzeug 1 in Kontakt gebracht werden kann, um die Werkzeug-Drehbewegung 9 zu bremsen. Exemplarisch wird der Bremskörper 41 mit der Schneide des als Sägeblatt ausgeführten Werkzeugs 1 in Kontakt gebracht, um die Werkzeug-Drehbewegung zu bremsen. Der Bremskörper 41 ist exemplarisch beweglich, insbesondere schwenkbeweglich, an dem Seitenschwingen-Gelenk 17 gelagert und kann zweckmäßigerweise durch ein Verschwenken um eine insbesondere parallel zur x-Richtung verlaufende Schwenkachse mit dem Werkzeug 1 in Kontakt gebracht werden, um dieses zu bremsen. Vorzugsweise ist die Schwenkachse, um die der Bremskörper 41 verschwenkbar ist, koaxial zur Schwenkachse des Seitenschwingen-Gelenks 17. Die Werkzeug-Bremseinrichtung 5 umfasst zweckmäßigerweise eine Aktoreinheit, um den Bremskörper 41 in Kontakt mit dem Werkzeug 1 zu bringen.

Alternativ zu der gezeigten Ausgestaltung kann die Werkzeug-Bremseinrichtung 5 auch ausgebildet sein, das Werkzeug 1 indirekt, insbesondere durch Bremsen eines mit dem Werkzeug 1 drehfest verbundenen Elements, beispielsweise einer Welle, zu bremsen.

Die Werkzeugvorrichtung 10 umfasst exemplarisch einen Werkzeugkopf 39, der das Werkzeug 1, die Mehrgelenkanordnung 6 und zweckmäßigerweise Werkzeug-Bremseinrichtung 5 umfasst. Exemplarisch befindet sich der Arbeitsbereich 33 in z-Richtung zwischen dem Werkzeugkopf 39 und der Werkstück-Auflagefläche 3.

Die Werkzeugvorrichtung 10 umfasst exemplarisch ferner ein Linearlager 29, das eine Linearbewegung 31 des Werkzeugs 1, insbesondere des Werkzeugkopfs 39, relativ zum Arbeitsbereich 33, insbesondere relativ zur Tragestruktur 2, vorzugsweise zur Werkstück-Auflagefläche 3, ermöglicht. Exemplarisch erfolgt die Linearbewegung 31 in y-Richtung.

Die Werkzeugvorrichtung 10 umfasst exemplarisch ferner eine Linearlager-Bremseinrichtung 32, die ausgebildet ist, beim Bremsen der Werkzeug-Drehbewegung 9 durch die Werkzeug-Bremseinrichtung 5 die Linearbewegung 31 des Werkzeugs 1, insbesondere des Werkzeugkopfs 39, relativ zur Werkstück-Auflagefläche 3 zu bremsen und/oder zu verhindern. Insbesondere ist die Linearlager-Bremseinrichtung 32 ausgebildet, in Ansprechen auf das Auslösen der Werkzeug-Bremseinrichtung 5 die Linearbewegung 31 des Werkzeugs 1, insbesondere des Werkzeugkopfs 39, relativ zur Werkstück-Auflagefläche 3 zu bremsen und/oder zu verhindern.

Exemplarisch ist die Linearlager-Bremseinrichtung 32 ausgebildet, vor, während, oder nach dem Bremsvorgang der Werkzeug-Bremseinrichtung 5 das Linearlager 29 zu sperren, um so zu verhindern, dass das Werkzeug 1 durch den Bremsvorgang der Werkzeug-Bremseinrichtung 5 in die Linearbewegung 31 versetzt wird. Die Linearlager-Bremseinrichtung 32 ist beispielsweise ausgebildet, zum Bremsen/Verhindern der Linearbewegung 31 eine erhöhte Reibung bereitzustellen. Ferner kann die Linearlager-Bremseinrichtung 32 ausgebildet sein, ab einer bestimmten Geschwindigkeit zu bremsen und/oder bei einer schlagartigen Beschleunigung zu blockieren oder zu bremsen. Die Linearlager-Bremseinrichtung 32 umfasst beispielsweise einen Fluiddämpfer und/oder einen Klemmkörper.

Vorzugsweise umfasst die Linearlager-Bremseinrichtung 32 und/oder die Werkzeug-Bremseinrichtung 5 einen piezoelektrischen Aktor, einen elektromagnetischen Aktor, einen Formgedächtnislegierungs-Aktor (FGL-Aktor), einen Elektroaktive-Polymere-Aktor (EAP-Aktor), einen Magnetic-Shape-Memory-Aktor (MSN-Aktor), einen pneumatischen Aktor, einen hydraulischen Aktor, einen Pyroaktor, einen mechanischen Aktor, einen elektrostriktiven Aktor und/oder einen thermischen Aktor.

Die Werkzeugvorrichtung 10 umfasst zweckmäßigerweise eine Steuereinheit 61, beispielsweise einen Mikrocontroller. Die Steuereinheit 61 ist ausgebildet, der Antriebseinheit 27 ein Antriebseinheit-Steuersignal bereitzustellen, um zu bewirken, dass die Antriebseinheit 27 das Werkzeug 1 in die Werkzeug-Drehbewegung 9 versetzt. Die Steuereinheit 61 ist zweckmäßigerweise ausgebildet, der Werkzeug-Bremseinrichtung 5 ein Bremseinrichtungs-Steuersignal bereitzustellen, um zu bewirken, dass die Werkzeug-Bremseinrichtung 5 die Werkzeug-Drehbewegung 9 bremst.

Die Steuereinheit 61 ist zweckmäßigerweise ferner ausgebildet, einen Betriebszustand zu erfassen und auf Basis des erfassten Betriebszustands das Bremsen der Werkzeug-Drehbewegung 9 durch die Werkzeug-Bremseinrichtung 5 auszulösen, insbesondere durch Bereitstellung des Bremseinrichtungs-Steuersignals.

Der von der Steuereinheit 61 erfasste Betriebszustand ist insbesondere ein Notzustand. Bei dem Notzustand handelt es sich insbesondere um eine für einen Benutzer potentiell gefährliche Situation, bei der der Benutzer beispielsweise durch das Werkzeug 1 und/oder das Werkstück 4 verletzt werden kann.

Die Steuereinheit 61 ist zweckmäßigerweise ausgebildet, den Notzustand auf Basis eines detektierten Kontakts und/oder eines detektierten Unterschreitens eines vorbestimmten minimalen Sicherheitsabstands zwischen dem Werkzeug 1 und dem menschlichen Körper, beispielsweise einem Finger, zu erfassen.

Vorzugsweise ist die Werkzeugvorrichtung 10, insbesondere die Steuereinheit 61, ausgebildet, dem Werkzeug 1 ein elektrisches Detektionssignal zuzuführen und auf Basis einer Änderung des Detektionssignals den Notzustand zu erfassen. Zweckmäßigerweise ist die Werkzeugvorrichtung 10, insbesondere die Steuereinheit 61 ausgebildet, dem Werkzeug 1 das elektrische Detektionssignal durch kapazitive Einkopplung zuzuführen.

Zweckmäßigerweise ist die Werkzeugvorrichtung 10, insbesondere die Steuereinheit 61 ausgebildet, den Notzustand, insbesondere den Kontakt zwischen dem Werkzeug 1 und dem menschlichen Körper, auf Basis einer kapazitiven Änderung zu erfassen. Weitere Details dazu, wie die Erfassung des Notzustands exemplarisch realisiert werden kann, sind in der EP 1 234 285 B1 beschrieben.

Die Steuereinheit 61 ist zweckmäßigerweise ferner ausgebildet, als den Notzustand einen Kickback zu erfassen. Mit dem Begriff "Kickback" ist insbesondere ein Zustand gemeint, bei dem während der Bearbeitung des Werkstücks 4 durch die Werkzeugvorrichtung 10 eine plötzliche und unerwartete Kraft zwischen der Werkzeugvorrichtung 10 und dem Werkstück 4 auftritt, durch die die Werkzeugvorrichtung 10 und/oder das Werkstück 4 in Bewegung versetzt wird.

Die Werkzeugvorrichtung 10 umfasst zweckmäßigerweise eine Sensoreinrichtung, beispielsweise einen Beschleunigungssensor und/oder einen Kraftsensor, insbesondere eine Dehnungsmessstreifen-Anordnung, zur Erfassung des Kickbacks. Eine derartige Sensoreinrichtung ist beispielsweise in der WO 2019/020307 A1 beschrieben.

Die Steuereinheit 61 ist zweckmäßigerweise ferner ausgebildet, als den Notzustand eine Fehlbedienung der Werkzeugvorrichtung 10 zu erfassen. Eine Fehlbedienung kann beispielsweise dann vorliegen, wenn ein Benutzer das Werkzeug 1 zu schnell bewegt, beispielsweise zu schnell um das Basisabschnitt-Gelenk 12 schwenkt. Exemplarisch ist die Steuereinheit 61 ausgebildet, zu erfassen, dass der Benutzer das Werkzeug 1 zu schnell bewegt und auf Basis dieser Erfassung das Bremsen der Werkzeug-Drehbewegung 9 mit der Werkzeug-Bremseinrichtung 5 auszulösen.

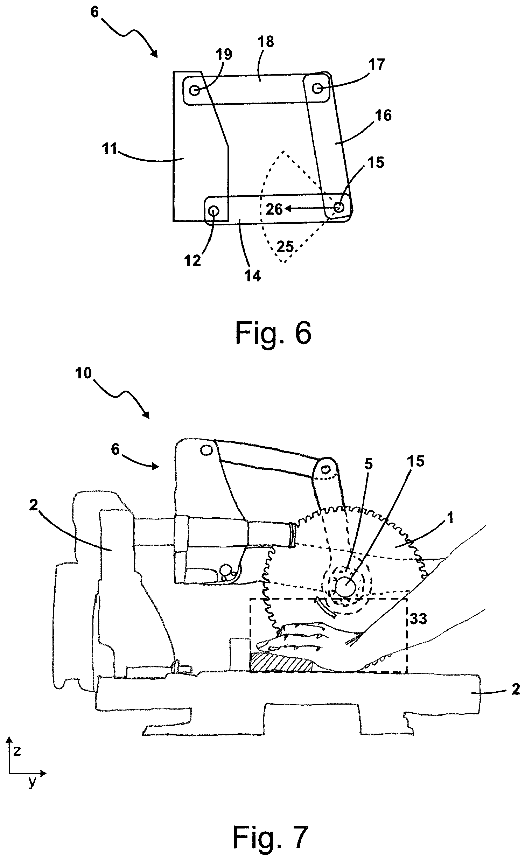

Die Figur 6 zeigt einen Winkelbereich 25 der Kraftrichtung einer beim Bremsen im Hauptschwingen-Gelenk 15 auftretenden Kraft. Exemplarisch handelt es sich bei dieser Kraft um die Summe aus der vorstehend erläuterten zweiten erststufigen Kraft 52 und der zweiten zweitstufigen Kraft 54. Die Kraftrichtung dieser Kraft hängt zweckmäßigerweise von der Anordnung der Werkzeug-Bremseinrichtung 5 relativ zur Schwenkachse des Hauptschwingen-Gelenks 15 ab, insbesondere von der Ausrichtung der (gedachten) Verbindungslinie zwischen dem Kontaktpunkt 73 (siehe Figur 3) und dem Hauptschwingen-Gelenk 15.

Bevorzugt ist die Werkzeug-Bremseinrichtung 5 derart angeordnet, dass die beim Bremsen der Werkzeug-Drehbewegung 9 im Hauptschwingen-Gelenk 15 auftretende Kraft in einem Winkelbereich 25 von +- 95 Grad, vorzugsweise +- 45 Grad, um eine auf der Hauptschwingen-Achse 21 liegende, in Richtung zu dem Basisabschnitts-Gelenk 12 zeigende, Achsrichtung 26 liegt. Zweckmäßigerweise wirkt diese Kraft auf das Werkzeuglager, insbesondere ein Sägeblattlager. Exemplarisch wird diese Kraft über das Werkzeuglager in die Hauptschwinge 14 eingebracht.

Durch den beschriebenen Winkelbereich 25 dieser Kraft kann verhindert werden, dass die beim Bremsen der Werkzeug-Drehbewegung 9 im Hauptschwingen-Gelenk 15, insbesondere im Werkzeuglager, auftretende Kraft in eine kritische Richtung des Werkzeuglagers wirkt, so dass darauf verzichtet werden kann, das Werkzeuglager in dieser kritischen Richtung dickwandig auszugestalten. Das Werkzeuglager kann daher mit einem schmalen Lagersitz ausgeführt werden, wodurch eine höhere Schnittkapazität der Säge erzielt werden kann.

Gemäß einer bevorzugten Ausgestaltung ist die Werkzeug-Bremseinrichtung 5 an der Seitenschwinge 16 angeordnet. Insbesondere ist die Werkzeug-Bremseinrichtung 5 strukturell mit der Seitenschwinge 16 verbunden, und zwar insbesondere derart, dass im Bremszustand, wenn die Werkzeug-Bremseinrichtung 5 die Werkzeug-Drehbewegung 9 blockiert, das Werkzeug 1 (über die Werkzeug-Bremseinrichtung 5) relativ zur Seitenschwinge 16 festgelagert ist, so dass keine relative Bewegung zwischen dem Werkzeug 1 und der Seitenschwinge 16 möglich ist.

Die Figur 7 zeigt eine erste exemplarische Variante der Werkzeugvorrichtung 10, bei der die Werkzeug-Bremseinrichtung 5 an der Seitenschwinge 16 und exemplarisch an dem Hauptschwingen-Gelenk 15 und zwar insbesondere um die Schwenkachse des Hauptschwingen-Gelenks 15 angeordnet ist.

Die Werkzeug-Bremseinrichtung 5 ist vorzugsweise reversibel ausgeführt, so dass die Werkzeug-Bremseinrichtung 5 nach einem Bremsvorgang zweckmäßigerweise ohne Austausch einer Komponente der Werkzeug-Bremseinrichtung 5 wieder zurück in einen Ausgangszustand versetzt werden kann, von dem aus ein weiterer Bremsvorgang durchführbar ist. Exemplarisch umfasst die Werkzeug-Bremseinrichtung 5 einen oder mehrere Bremskörper, die zum Bremsen des Werkzeugs 1 mit einer mit dem Werkzeug 1 gekoppelten Welle in Kontakt gebracht werden. Exemplarisch sind mehrere Bremskörper vorhanden, die in Umfangsrichtung um die mit dem Werkzeug 1 gekoppelte Welle herum verteilt angeordnet sind.

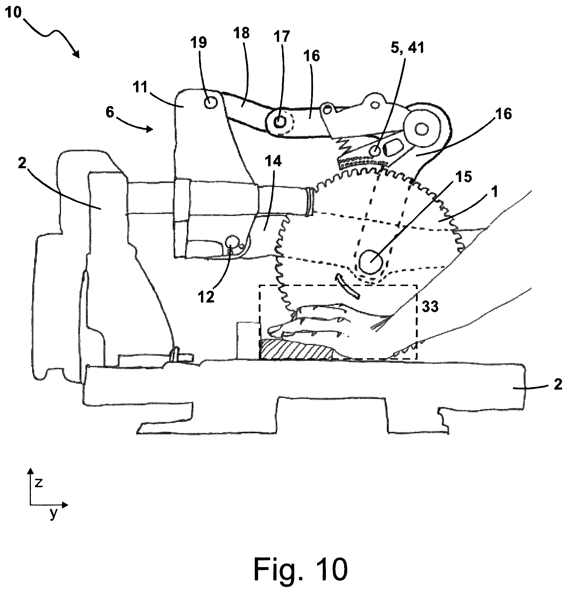

Die Figur 10 zeigt eine zweite exemplarische Variante der Werkzeugvorrichtung 10, bei der die Werkzeug-Bremseinrichtung 5 an der Seitenschwinge 16 und exemplarisch (in Bezug auf den Verlauf der Seitenschwinge 16) zwischen dem Hauptschwingen-Gelenk 15 und dem Seitenschwinge-Gelenk 17 angeordnet ist.

Exemplarisch hat die Seitenschwinge 16 einen L-förmigen Verlauf und die Werkzeug-Bremseinrichtung 5 ist zweckmäßigerweise an der Beuge der Seitenschwinge 16 angeordnet. Gemäß einer (nicht in den Figuren gezeigten) alternativen Ausgestaltung hat die Seitenschwinge 16 einen anderen Verlauf, also insbesondere keinen L-förmigen Verlauf.

Zweckmäßigerweise ist die Werkzeug-Bremseinrichtung 5 derart angeordnet, dass der Abstand der Werkzeug-Bremseinrichtung 5 zum Außendurchmesser des Werkzeugs 1, beispielsweise des Sägeblatts, beim Schwenken des Werkzeugs 1 (mittels der Mehrgelenkanordnung 6) konstant bleibt. Zweckmäßigerweise ist die Bremseinrichtung 5 derart angeordnet, dass sie sich in gleichbleibendem Abstand um das Werkzeug 1, insbesondere das Sägeblatt, bewegt, wenn das Werkzeug 1 mittels der Mehrgelenkanordnung 6 verschwenkt wird.

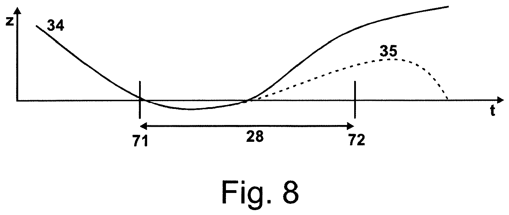

Die Werkzeugvorrichtung 10, insbesondere die Steuereinheit 61, ist zweckmäßigerweise ausgebildet, im Zusammenhang mit dem Auslösen der Werkzeug-Bremseinrichtung 5 die Antriebseinheit 27 zu deaktivieren. Zweckmäßigerweise ist die Werkzeugvorrichtung 10, insbesondere die Steuereinheit 61, ausgebildet, die Deaktivierung der Antriebseinheit 27 zeitverzögert zu dem Auslösen der Werkzeug-Bremseinrichtung 5 durchzuführen. Wie nachstehend unter Bezugnahme auf die Figur 8 erläutert, kann hierdurch die Antriebseinheit 27 in vorteilhafter Weise genutzt werden, um die in Wegführrichtung 8 wirkende Kraft zu vergrößern und/oder länger wirken zu lassen, so dass das Werkzeug 1 beispielsweise weiter und/oder länger in Wegführrichtung 8 verschwenkt wird.

Die Figur 8 zeigt ein Schaubild eines zeitlichen Verlaufs der z-Position des Werkzeugs 1 während eines Bremsvorgangs der Werkzeug-Bremseinrichtung 5. Die durchgezogene Linie 34 zeigt den zeitlichen Verlauf der z-Position bei Bereitstellung der nachstehend erläuterten Verzögerungszeit 28 und die gestrichelte Linie 35 zeigt den zeitlichen Verlauf der z-Position ohne Bereitstellung der Verzögerungszeit. Die Nulllinie der z-Achse soll hier eine Grenze zu einem gefährlichen z-Bereich kennzeichnen, beispielsweise einem z-Bereich, in dem eine Verletzung des Benutzers erfolgen kann, und/oder den Arbeitsbereich 33.

Die Werkzeugvorrichtung 10, insbesondere die Steuereinheit 61, ist vorzugsweise ausgebildet, zwischen einem Auslösen der Werkzeug-Bremseinrichtung 5 und einem Abschalten der Antriebseinheit 27 eine Verzögerungszeit 28 einzuhalten. Die Verzögerungszeit 28 beträgt exemplarisch zwischen 20 ms und 1 s. Die Werkzeugvorrichtung 10 ist ausgebildet, während der Verzögerungszeit 28 eine von der Antriebseinheit 27 bereitgestellte, auf das Werkzeug 1 wirkende Antriebskraft mittels der Mehrgelenkanordnung 6 umzulenken, so dass das Werkzeug 1 in Wegführrichtung 8 verschwenkt wird. Insbesondere setzt die Mehrgelenkanordnung 6 die aus dem Drehantrieb des Werkzeugs 1 resultierenden erststufigen Kräfte 51 und 52 in die Kraftkomponenten 56, 58 um, die zweckmäßigerweise in eine in Wegführrichtung 8 wirkende Kraft resultieren.

Exemplarisch wird das Werkzeug 1 zunächst in z-Richtung nach unten bewegt (beispielsweise durch einen Benutzer, der das Werkzeug 1 über den Griff 59 manuell in eine Schwenkbewegung nach unten versetzt). Zu einem Auslöse-Zeitpunkt 71 löst die Werkzeugvorrichtung 10 die Werkzeug-Bremseinrichtung 5 aus, beispielsweise in Reaktion darauf, dass sich das Werkzeug 1 in Kontakt mit dem Benutzer befindet. Exemplarisch tritt das Werkzeug 1 zum Auslöse-Zeitpunkt 71 (oder kurz davor) in den gefährlichen z-Bereich ein. Durch das Auslösen der Werkzeug-Bremseinrichtung 5 wird die Werkzeug-Drehbewegung 9 zweckmäßigerweise zum Stillstand gebremst. Die Antriebseinheit 27 bleibt weiterhin aktiv und übt ein in die Richtung der Werkzeug-Drehbewegung 9 wirkendes Drehmoment auf das abgebremste Werkzeug 1 aus. Durch den Bremsvorgang und die weiterhin aktive Antriebseinheit 27 wird eine Kraft in Richtung der Wegführrichtung 8 bereitgestellt, so dass das Werkzeug 1 in die Wegführrichtung 8 verschwenkt wird, wie in der Figur 8 durch den Anstieg in z-Richtung gezeigt. Zum Abschalt-Zeitpunkt 72 deaktiviert die Werkzeugvorrichtung 10 schließlich die Antriebseinheit 27.

Die gestrichelte Linie 35 zeigt einen konventionellen Verlauf, bei dem die Deaktivierung der Antriebseinheit 27 zeitgleich mit dem Auslösen der Werkzeug-Bremseinrichtung 5 erfolgt. In diesem Fall wird eine weniger lang wirkende und/oder schwächere Kraft in Wegführrichtung 8 bereitgestellt. Oftmals wird die Mehrgelenkanordnung 6 zu dem Zeitpunkt, zu dem die Werkzeug-Bremseinrichtung 5 ausgelöst wird, von dem Benutzer manuell geführt, beispielsweise mittels des Griffs 59. Tritt in diesem Zustand eine Kraft in die Wegführrichtung 8 auf, so tendiert der Benutzer typischerweise dazu, dieser Kraft entgegenzuwirken und durch eine Kraft in Zuführrichtung 7 auszuüben, also exemplarisch über den Griff 59 das Werkzeug 1 nach unten zu drücken. Wird die in Wegführrichtung 8 wirkende Kraft nur kurz bereitgestellt, so besteht das Risiko, dass der Benutzer durch seine Kraftaufbringung das Werkzeug 1 in Zuführrichtung 7 bewegt, was eine schwere Verletzung des Benutzers zur Folge haben kann.

Durch die Bereitstellung der Verzögerungszeit 28 und der dadurch bewirkten größeren und/oder längeren Kraft in Wegführrichtung 8 kann erzielt werden, dass der Benutzer die gefährliche Situation rechtzeitig realisiert und mit der manuellen, in Zuführrichtung 7 wirkenden Betätigung der Mehrgelenkanordnung 6 aufhört, bevor er eine Verschwenkung in Zuführrichtung 7 bewirkt.

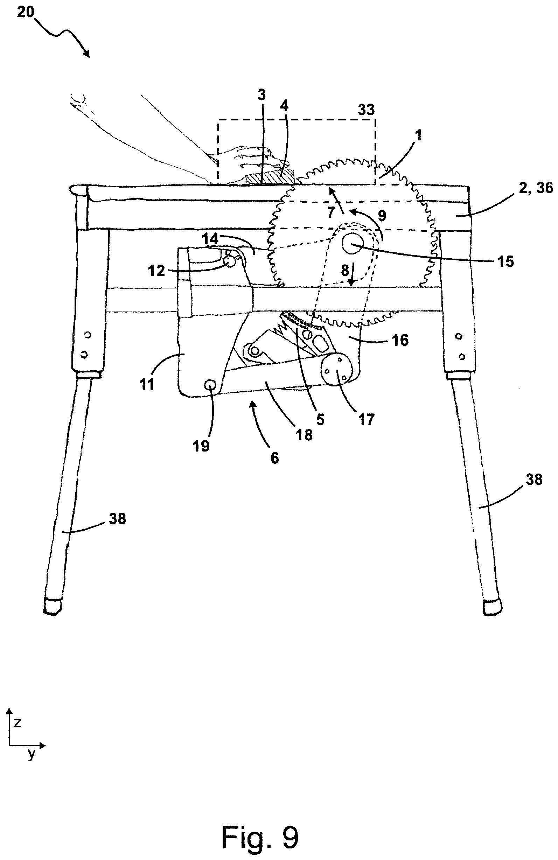

Die Figur 9 zeigt eine Werkzeugvorrichtung 20 gemäß einer zweiten Ausführungsform. Bis auf die nachstehend erläuterten Unterschiede ist die Werkzeugvorrichtung 20 vorzugsweise in Entsprechung zu der vorstehend erläuterten Werkzeugvorrichtung 10 gemäß der ersten Ausführungsform ausgebildet, so dass die vorstehend erläuterten Merkmale zweckmäßigerweise auch bei der Werkzeugvorrichtung 20 vorhanden sind.

Die Werkzeugvorrichtung 20 ist exemplarisch als Tischsäge, insbesondere als Tischzugsäge, ausgeführt. Bei der Werkzeugvorrichtung 20 gemäß der zweiten Ausführungsform befindet sich die Mehrgelenkanordnung 6 zweckmäßigerweise in z-Richtung unter dem Arbeitsbereich 33, insbesondere unter der Werkstück-Auflagefläche 3. Das Werkzeug 1 ragt (in der gezeigten Arbeitsstellung) zumindest teilweise in z-Richtung über die Werkstück-Auflagefläche 3 hinaus. In der Sicherheitsstellung befindet sich das Werkzeug 1 vorzugsweise vollständig unterhalb der Werkstück-Auflagefläche 3. Mittels der Mehrgelenkanordnung 6 ist das Werkzeug 1 wahlweise in Wegführrichtung 8 (von der Arbeitsstellung in die Sicherheitsstellung) oder in Zuführrichtung 7 (von der Sicherheitsstellung in die Arbeitsstellung) schwenkbar.

Gegenüber der ersten Ausführungsform ist bei der zweiten Ausführungsform die Mehrgelenkanordnung 6 zweckmäßigerweise um eine x-y-Ebene gespiegelt, so dass die Hauptschwinge 14 in z-Richtung über der Nebenschwinge 18 liegt.

Beim Bremsen der Werkzeug-Drehbewegung 9 bewirkt die Mehrgelenkanordnung 6, dass das Werkzeug 1 nicht in Zuführrichtung 7, sondern zweckmäßigerweise in Wegführrichtung 8 geschwenkt wird - also exemplarisch nach unten.

Der Drehvektor der Verschwenkung in Zuführrichtung 7 zeigt exemplarisch in die gleiche Richtung wie der Drehvektor der Werkzeug-Drehbewegung 9 und in entgegengesetzte Richtung wie der Drehvektor der Verschwenkung in Wegführrichtung 8.

## Patentansprüche

1. Werkzeugvorrichtung (10, 20), insbesondere Sägevorrichtung, mit einem Werkzeug (1) zur Bearbeitung eines in einem Arbeitsbereich (33) befindlichen Werkstücks (4), umfassend:
- eine Werkzeug-Bremseinrichtung (5) zum Bremsen einer Werkzeug-Drehbewegung (9) des Werkzeugs (1), und
- eine Mehrgelenkanordnung (6), mit der das Werkzeug (1) wahlweise in eine Zuführrichtung (7) in den Arbeitsbereich (33) oder in eine Wegführrichtung (8) aus dem Arbeitsbereich (33) geschwenkt werden kann, wobei
- die Mehrgelenkanordnung (6) ausgebildet ist, beim Bremsen der Werkzeug-Drehbewegung (9) auftretende Kräfte unter Beibehaltung der Verschwenkbarkeit des Werkzeugs (1) aufzunehmen und/oder umzulenken, so dass das Werkzeug (1) durch die beim Bremsen der Werkzeug-Drehbewegung (9) auftretenden Kräfte nicht in Zuführrichtung (7) geschwenkt wird oder durch die beim Bremsen der Werkzeug-Drehbewegung (9) auftretenden Kräfte in Wegführrichtung (8) geschwenkt wird,
wobei die Werkzeugvorrichtung (10) eine Antriebseinheit (27) umfasst, um das Werkzeug (1) in die Werkzeug-Drehbewegung (9) zu versetzen, **dadurch gekennzeichnet, dass** die Werkzeugvorrichtung (10) ausgebildet ist, zwischen einem Auslösen der Werkzeug-Bremseinrichtung (5) und einem Abschalten der Antriebseinheit (27) eine Verzögerungszeit (28) einzuhalten und während der Verzögerungszeit (28) eine von der Antriebseinheit (27) bereitgestellte, auf das Werkzeug (1) wirkende Antriebskraft mittels der Mehrgelenkanordnung (6) umzulenken, so dass das Werkzeug (1) in Wegführrichtung (8) verschwenkt wird.

2. Werkzeugvorrichtung (10, 20) nach Anspruch 1, wobei die Mehrgelenkanordnung (6) derart ausgebildet und/oder angeordnet ist, dass sich während dem Bremsen der Werkzeug-Drehbewegung (9) der Schwerpunkt der Werkzeugvorrichtung (10, 20) in eine von der Zuführrichtung (7) verschiedene Richtung bewegt.

3. Werkzeugvorrichtung (10) nach Anspruch 1 oder 2, wobei die Mehrgelenkanordnung (6) wenigstens vier Gelenke umfasst.

4. Werkzeugvorrichtung (10) nach einem der voranstehenden Ansprüche, wobei die Mehrgelenkanordnung (6) einen Basisabschnitt (11), eine über ein Basisabschnitts-Gelenk (12) an dem Basisabschnitt (11) verschwenkbar gelagerte Hauptschwinge (14), eine über ein Hauptschwingen-Gelenk (15) an der Hauptschwinge (14) verschwenkbar gelagerte Seitenschwinge (16) und eine über ein Seitenschwingen-Gelenk (17) an der Seitenschwinge (16) verschwenkbar gelagerte Nebenschwinge (18) umfasst, die über ein Nebenschwingen-Gelenk (19) verschwenkbar an dem Basisabschnitt (11) gelagert ist.

5. Werkzeugvorrichtung (10) nach Anspruch 4, wobei eine durch das Basisabschnitts-Gelenk (12) und das Hauptschwingen-Gelenk (15) verlaufende gedachte Hauptschwingen-Achse (21) und eine durch das Nebenschwingen-Gelenk (19) und das Seitenschwingen-Gelenk (17) verlaufende gedachte Nebenschwingen-Achse (22) parallel zueinander verlaufen oder auf derjenigen Seite des Basisabschnitts (11), auf der das Werkzeug (1) angeordnet ist, unter einem Achsenwinkel (23) zusammenlaufen.

6. Werkzeugvorrichtung (10) nach Anspruch 5, wobei der Achsenwinkel (23) zwischen 45 Grad und 0 Grad, insbesondere zwischen 15 Grad und 5 Grad, beträgt.

7. Werkzeugvorrichtung (10) nach einem der Ansprüche 4 bis 6, wobei die Hauptschwingen-Achse (21) und die Nebenschwingen-Achse (22) über wenigstens 80 % des Schwenkbereichs (24) der Mehrgelenkanordnung (6), insbesondere über den gesamten Schwenkbereich (24) der Mehrgelenkanordnung (6), vorzugsweise über einen Schwenkbereich (24) von 55 Grad, parallel zueinander verlaufen oder auf derjenigen Seite des Basisabschnitts (11), auf der das Werkzeug (1) angeordnet ist, unter einem Achsenwinkel (23) zusammenlaufen.

8. Werkzeugvorrichtung (10) nach einem der Ansprüche 4 bis 7, wobei die Hauptschwingen-Achse (21) und die Nebenschwingen-Achse (22) über wenigstens 80 % des Schwenkbereichs (24) der Mehrgelenkanordnung (6) auf derjenigen Seite des Basisabschnitts (11), auf der das Werkzeug (1) angeordnet ist, unter einem Achsenwinkel (23) zusammenlaufen, wobei die Hauptschwingen-Achse (21) und die Nebenschwingen-Achse (22) zweckmäßigerweise über den restlichen Anteil des Schwenkbereichs (24) parallel zueinander verlaufen.

9. Werkzeugvorrichtung (10) nach einem der Ansprüche 7 oder 8, wobei die Änderung des Achsenwinkels (23) über wenigstens 80 % des Schwenkbereichs (24), insbesondere über den gesamten Schwenkbereich (24), weniger als 20 Grad beträgt.

10. Werkzeugvorrichtung (10) nach einem Ansprüche 4 bis 9, wobei das Werkzeug (1) koaxial zu dem Hauptschwingen-Gelenk (15) angeordnet ist.

11. Werkzeugvorrichtung (10) nach einem der Ansprüche 4 bis 10, wobei die Werkzeug-Bremseinrichtung (5) an der Seitenschwinge (16), insbesondere an dem Hauptschwingen-Gelenk (15) oder an dem Seitenschwingen-Gelenk (17) angeordnet ist.

12. Werkzeugvorrichtung (10) nach einem der Ansprüche 4 bis 11, wobei die Werkzeug-Bremseinrichtung (5) derart angeordnet ist, dass eine beim Bremsen der Werkzeug-Drehbewegung (9) im Hauptschwingen-Gelenk (15) auftretende Kraft in einem Winkelbereich (25) von +- 95 Grad, vorzugsweise +- 45 Grad, um eine auf der Hauptschwingen-Achse (21) liegende, in Richtung zu dem Basisabschnitts-Gelenk (12) zeigende, Achsrichtung (26) liegt.

13. Werkzeugvorrichtung (10) nach einem der voranstehenden Ansprüche, wobei die Antriebseinheit (27) an der Hauptschwinge (14) angeordnet ist.

14. Werkzeugvorrichtung (10) nach einem der voranstehenden Ansprüche, wobei die Verzögerungszeit (28) zwischen 20 ms und 1 s beträgt.

15. Werkzeugvorrichtung (10) nach einem der voranstehenden Ansprüche, ferner umfassend ein Linearlager (29), das eine Linearbewegung (31) des Werkzeugs (1) relativ zur Werkstück-Auflagefläche (3) ermöglicht, ferner umfassend eine Linearlager-Bremseinrichtung (32), die ausgebildet ist, beim Bremsen der Werkzeug-Drehbewegung (9) die Linearbewegung (31) des Werkzeugs (1) relativ zur Werkstück-Auflagefläche (3) zu bremsen und/oder zu verhindern.

## Claims

1. Tool device (10, 20), in particular saw device, with a tool (1) for processing a workpiece (4) located in a working area (33), comprising:
- a tool braking device (5) for braking a tool rotary movement (9) of the tool (1), and
- a multi-joint arrangement (6) by means of which the tool (1) can be pivoted selectively in a feed direction (7) into the working area (33) or in a removal direction (8) out of the working area (33), wherein
- the multi-joint arrangement (6) is designed to, while maintaining the pivotability of the tool (1), absorb and/or redirect forces occurring during braking of the tool rotary movement (9), so that the tool (1) is not pivoted in the feed direction (7) by the forces occurring during braking of the tool rotary movement (9) or is pivoted in the removal direction (8) by the forces occurring during braking of the tool rotary movement (9),
wherein
the tool device comprises a drive unit (27) for setting the tool (1) in the tool rotary movement (9), **characterized in that** the tool device (10) is adapted to maintain a delay time (28) between a triggering of the tool braking device (5) and a switching off of the drive unit (27) and, during the delay time (28), to redirect a drive force, which is provided by the drive unit (27) and acts on the tool (1), by means of the multi-joint arrangement (6), so that the tool (1) is pivoted in the removal direction (8).

2. Tool device (10, 20) according to claim 1, wherein the multi-joint arrangement (6) is designed and/or arranged in such a way that during braking of the tool rotary movement (9) the centre of gravity of the tool device (10, 20) moves in a direction different from the feed direction (7).

3. Tool device (10) according to claim 1 or 2, wherein the multi-joint arrangement (6) comprises at least four joints.

4. Tool device (10) according to one of the preceding claims, wherein the multi-joint arrangement (6) comprises a base section (11), a main swing arm (14) pivotally mounted on the base section (11) via a base section joint (12), a side swing arm (16) pivotally mounted to the main swing arm (14) via a main swing arm joint (15), and a secondary swing arm (18) pivotally mounted to the side swing arm (16) via a side swing arm joint (17) and pivotally mounted to the base section (11) via a secondary swing arm joint (19).

5. Tool device (10) according to claim 4, wherein an imaginary main swing arm axis (21) extending through the base section joint (12) and the main swing arm joint (15) and an imaginary secondary swing arm axis (22) extending through the secondary swing arm joint (19) and the side swing arm joint (17) run parallel to each other or converge at an axis angle (23) on that side of the base section (11) on which the tool (1) is arranged.

6. Tool device (10) according to claim 5, wherein the axis angle (23) is between 45 degrees and 0 degrees, in particular between 15 degrees and 5 degrees.

7. Tool device (10) according to one of claims 4 to 6, wherein, over at least 80% of the pivot range (24) of the multi-joint arrangement (6), in particular over the entire pivot range (24) of the multi-joint arrangement (6), preferably over a pivot range (24) of 55 degrees, the main swing arm axis (21) and the secondary swing arm axis (22) run parallel to each other or converge at an axis angle (23) on that side of the base section (11) on which the tool (1) is arranged.

8. Tool device (10) according to one of claims 4 to 7, wherein, over at least 80% of the pivot range (24) of the multi-joint arrangement (6), the main swing arm axis (21) and the secondary swing arm axis (22) converge at an axis angle (23) on that side of the base section (11) on which the tool (1) is arranged, the main swing arm axis (21) and the secondary swing arm axis (22) expediently running parallel to each other over the remaining portion of the pivot range (24).

9. Tool device (10) according to one of claims 7 or 8 , wherein (23) over at least 80% of the pivot range (24), in particular over the entire pivot range (24), the change in the axis angle is less than 20 degrees.

10. Tool device (10) according to one of claims 4 to 9 , wherein the tool (1) is arranged coaxially with the main swing arm joint (15).

11. Tool device (10) according to one of claims 4 to10 , wherein the tool braking device (5) is arranged on the side swing arm (16), in particular on the main swing arm joint (15) or on the side swing arm joint (17).

12. Tool device (10) according to one of claims 4 to 11, wherein the tool braking device (5) is arranged in such a way that a force occurring in the main swing arm joint (15) during braking of the tool rotary movement (9) lies in an angular range (25) of +- 95 degrees, preferably +- 45 degrees, about an axial direction (26) lying on the main swing arm joint axis (21) and pointing in the direction of the base section joint (12).

13. Tool device (10) according to one of the preceding claims, wherein the drive unit (27) is arranged on the main swing arm (14).

14. Tool device (10) according to one of the preceding claims, wherein the delay time (28) is between 20 ms and 1 s.

15. Tool device (10) according to one of the preceding claims, further comprising a linear bearing (29) allowing a linear movement (31) of the tool (1) relative to the workpiece support surface (3), further comprising a linear bearing braking device (32) adapted to brake and/or prevent the linear movement (31) of the tool (1) relative to the workpiece support surface (3) when braking the tool rotary movement (9).

## Revendications

1. Dispositif d'outil (10, 20), en particulier dispositif de scie, avec un outil (1) destiné à usiner une pièce (4) se trouvant dans une zone de travail (33), comprenant :
- un système de freinage d'outil (5) destiné à freiner un mouvement de rotation d'outil (9) de l'outil (1), et
- un ensemble à plusieurs articulations (6), avec lequel l'outil (1) peut être pivoté au choix dans une direction d'amenée (7) dans la zone de travail (33) ou dans une direction d'évacuation (8) hors de la zone de travail (33), dans lequel
- l'ensemble à plusieurs articulations (6) est réalisé pour absorber et/ou dévier des forces apparaissant lors du freinage du mouvement de rotation d'outil (9) en conservant la possibilité de pivotement de l'outil (1) de telle sorte que l'outil (1) n'est pas pivoté dans la direction d'amenée (7) par les forces apparaissant lors du freinage du mouvement de rotation d'outil (9) ou est pivoté dans la direction d'évacuation (8) par les forces apparaissant lors du freinage du mouvement de rotation d'outil (9),
dans lequel
le dispositif d'outil (10) comprend une unité d'entraînement (27) pour amener l'outil (1) dans le mouvement de rotation d'outil (9), **caractérisé en ce que**
le dispositif d'outil (10) est réalisé pour respecter un temps de retard (28) entre un déclenchement du système de freinage d'outil (5) et une mise hors service de l'unité d'entraînement (27) et pour dévier, pendant le temps de retard (28), une force d'entraînement fournie par l'unité d'entraînement (27), agissant sur l'outil (1) au moyen de l'ensemble à plusieurs articulations (6) de sorte que l'outil (1) est pivoté dans la direction d'évacuation (8).

2. Dispositif d'outil (10, 20) selon la revendication 1, dans lequel l'ensemble à plusieurs articulations (6) est réalisé et/ou disposé de telle manière que le centre de gravité du dispositif d'outil (10, 20) se déplace dans une direction différente de la direction d'amenée (7) pendant le freinage du mouvement de rotation d'outil (9).

3. Dispositif d'outil (10) selon la revendication 1 ou 2, dans lequel l'ensemble à plusieurs articulations (6) comprend au moins quatre articulations.

4. Dispositif d'outil (10) selon l'une quelconque des revendications précédentes, dans lequel l'ensemble à plusieurs articulations (6) comprend une section de base (11), un bras oscillant principal (14) monté de manière à pouvoir pivoter sur la section de base (11) par l'intermédiaire d'une articulation de section de base (12), un bras oscillant latéral (16) monté de manière à pouvoir pivoter sur le bras oscillant principal (14) par l'intermédiaire d'une articulation de bras oscillant (15) et un bras oscillant secondaire (18) monté de manière à pouvoir pivoter sur le bras oscillant latéral (16) par l'intermédiaire d'une articulation de bras oscillant latéral (17), qui est monté sur la section de base (11) de manière à pouvoir pivoter par l'intermédiaire d'une articulation de bras oscillant secondaire (19).

5. Dispositif d'outil (10) selon la revendication 4, dans lequel un axe de bras oscillant principal (21) imaginaire s'étendant à travers l'articulation de section de base (12) et l'articulation de bras oscillant principal (15) et un axe de bras oscillant secondaire (22) imaginaire s'étendant à travers l'articulation de bras oscillant secondaire (19) et l'articulation de bras oscillant latéral (17) s'étendent de manière parallèle l'un par rapport à l'autre ou convergent selon un angle axial (23) sur le côté de la section de base (11), sur lequel précisément l'outil (1) est disposé.

6. Dispositif d'outil (10) selon la revendication 5, dans lequel l'angle axial (23) est compris entre 45 degrés et 0 degré, en particulier entre 15 degrés et 5 degrés.

7. Dispositif d'outil (10) selon l'une quelconque des revendications 4 à 6, dans lequel l'axe de bras oscillant principal (21) et l'axe de bras oscillant secondaire (22) s'étendent de manière parallèle l'un par rapport à l'autre sur au moins 80 % de la plage de pivotement (24) de l'ensemble à plusieurs articulations (6), en particulier sur la totalité de la plage de pivotement (24) de l'ensemble à plusieurs articulations (6), de préférence sur une plage de pivotement (24) de 55 degrés ou convergent selon un angle axial (23) sur le côté de la section de base (11), sur lequel précisément l'outil (1) est disposé.

8. Dispositif d'outil (10) selon l'une quelconque des revendications 4 à 7, dans lequel l'axe de bras oscillant principal (21) et l'axe de bras oscillant secondaire (22) convergent selon un angle axial (23) sur au moins 80 % de la plage de pivotement (24) de l'ensemble à plusieurs articulations (6) sur le côté de la section de base (11), sur lequel précisément l'outil (1) est disposé, dans lequel l'axe de bras oscillant principal (21) et l'axe de bras oscillant secondaire (22) s'étendent de manière opportune de manière parallèle l'un par rapport à l'autre sur la partie restante de la plage de pivotement (24).

9. Dispositif d'outil (10) selon l'une quelconque des revendications 7 ou 8, dans lequel la modification de l'angle axial (23) est inférieure à 20 degrés sur au moins 80 % de la plage de pivotement (24), en particulier sur la totalité de la plage de pivotement (24).

10. Dispositif d'outil (10) selon l'une quelconque des revendications 4 à 9, dans lequel l'outil (1) est disposé de manière coaxiale par rapport à l'articulation de bras oscillant principal (15).

11. Dispositif d'outil (10) selon l'une quelconque des revendications 4 à 10, dans lequel le système de freinage d'outil (5) est disposé sur le bras oscillant latéral (16), en particulier sur l'articulation de bras oscillant principal (15) ou sur l'articulation de bras oscillant latéral (17).

12. Dispositif d'outil (10) selon l'une quelconque des revendications 4 à 11, dans lequel le système de freinage d'outil (5) est disposé de telle manière qu'une force apparaissant lors du freinage du mouvement de rotation d'outil (9) dans l'articulation de bras oscillant principal (15) se situe dans une plage angulaire (25) de +- 95 degrés, de préférence de +- 45 degrés, autour d'une direction axiale (26) située sur l'axe de bras oscillant principal (21), pointant en direction de l'articulation de section de base (12).

13. Dispositif d'outil (10) selon l'une quelconque des revendications précédentes, dans lequel l'unité d'entraînement (27) est disposée sur le bras oscillant principal (14).

14. Dispositif d'outil (10) selon l'une quelconque des revendications précédentes, dans lequel le temps de retard (28) est compris entre 20 ms et 1 s.

15. Dispositif d'outil (10) selon l'une quelconque des revendications précédentes, comprenant en outre un palier linéaire (29), qui permet un mouvement linéaire (31) de l'outil (1) par rapport à la surface de support de pièce (3), comprenant en outre un système de freinage de palier linéaire (32), qui est réalisé pour freiner et/ou empêcher le mouvement linéaire (31) de l'outil (1) par rapport à la surface de support de pièce (3) lors du freinage du mouvement de rotation d'outil (9).
